# EUROPEAN PATENT APPLICATION

(11) **EP 2 273 223 A1**
(43) Date of publication of application: **12.01.2011**
(21) Application number: 10165128.9
(22) Date of filing: 07.06.2010
(51) Int. Cl.: F28D 1/06, F24D 17/00

(54) **Heat exchanger for a shower**

(30) Priority: 09.06.2009 NL 2002988
(71) Applicant: Hei-Tech B.V., 7825 AW Emmen (NL)
(72) Inventor: Heidemans, Jacob, 7912 TH Nieuweroord (NL)
(74) Representative: Hatzmann, Martin

(57) **Abstract**

A heat exchanger is designed for building-in in a floor (4) of a shower arrangement. Viewed in built-in operating condition, the heat exchanger (1) comprises:
- a drain trough (5) lying recessed in the floor for collecting waste water, which drain trough has a substantially horizontally extending trough longitudinal direction (L);
- a heat exchanging separation construction (7), via which heat transfer between the waste water and tap water takes place, and which is substantially located in a vertical projection space (8) of the drain trough, located under the drain trough, and extends in the projection space substantially both in the trough longitudinal direction and in vertical direction; and
- a waste water distributing construction (9) which, viewed in the built-in operating condition and in the sense of the flow of the waste water, is situated upstream of the separation construction and guides the waste water collected by the drain trough in a manner distributed in the trough longitudinal direction to the separation construction.

## Description

The invention relates to a heat exchanger for a shower arrangement, designed for heat transfer from waste water which is discharged from the shower arrangement to tap water which is supplied to the shower arrangement.

From NL1009927 such a heat exchanger is known which is placed substantially horizontally under a bottom of a shower arrangement. With this known heat exchanger, the aim is to make maximum use of the floor surface of the shower arrangement under which the heat exchanger is arranged. An important drawback of this known heat exchanger is that it is not suitable, or hardly so, for a shower arrangement that has a tiled floor. To begin with, installing the known heat exchanger is not practical in that during the construction of the shower arrangement the tiles of the tiled floor cannot be fitted until the heat exchanger has been installed in the floor. A still more important drawback is that the known heat exchanger, once it is installed in the floor and covered with tiles, is more or less inaccessible for maintenance or replacement, since that would require the tiled floor to be broken open.

Further, from NL1014030 such a heat exchanger is known. This known heat exchanger is tubular and is installed vertically in a space under the story where a showering space is present. As a result, waste water coming from the shower space can, without use of a pump, flow by gravity down through the heat exchanger. A drawback of this known tubular heat exchanger is that it takes up much vertical space in a building or house, which limits the application possibilities of this tubular heat exchanger. Thus, in houses where the shower is on the ground floor, such a tubular heat exchanger typically is not practically applicable. The drawback mentioned can be partly removed by pumping the waste water to the heat exchanger, as is known, for example, from NL1028249. For if there is pumping, the tubular heat exchanger no longer needs to be installed below the story where a shower space is present. The tubular heat exchanger can then, for example, be placed vertically as well at the same story as the showering space, and waste water can be pumped up to the top of the heat exchanger. However, the drawback then still remains that this tubular heat exchanger takes up much vertical space. Moreover, it is a drawback that pumping up waste water takes energy. Furthermore, it is a drawback that installing, maintaining and replacing this tubular heat exchanger is laborious.

It is an object of the invention to provide at least an alternative such heat exchanger and, more particularly, to provide such a heat exchanger that is simple to install, maintain and replace, also at a shower arrangement provided with a tiled floor.

To this end, according to the invention, a heat exchanger according to claim 1 is provided.

In such a heat exchanger according to the invention, accordingly, the waste water is collected in a drain trough, the heat exchanging separation construction is substantially located in a vertical projection space of the drain trough located under the drain trough, and the waste water collected by the drain trough is guided in a manner distributed in the trough longitudinal direction to the heat exchanging separation construction. A drain trough is very suitable for use in a tiled floor, also in the case where tiles of large dimensions are used. The heat exchanger according to the invention is simple to install, maintain and replace because these operations can be carried out in a narrow box-like recess in the floor at the position of the drain trough. These operations are not hindered by the presence of a tiled floor because the tiled floor is evidently interrupted at the location of the drain trough. The necessary vertical depth of the boxlike floor recess is limited because the heat exchanging separation construction extends in the trough longitudinal direction. The length of the drain trough is hence utilized to create heat exchanging surface for the heat exchanger. Owing to the limited vertical depth mentioned, the heat exchanger according to the invention can be eminently used, for example, in a shower arrangement on the ground floor of a house or building, without necessitating a pump to pump up waste water. When, for example, the length of the drain trough is in the magnitude order of 70 to 80 centimeters, a floor recess having a depth in the magnitude order of 30 to 50 centimeters will normally suffice to install the heat exchanger. In many houses and buildings this is amply sufficient to realize a shower arrangement on the ground floor because the sewer connection of many houses and buildings is normally more than 50 centimeters below the floor surface of the ground floor.

A drain trough as meant here has an elongated shape in top plan view. This is here understood to mean that, viewed in the built-in operating condition, the maximum length of the drain trough in the trough longitudinal direction is minimally four times as great as the maximum horizontally measured width of the drain trough transverse to the trough longitudinal direction.

Specific embodiments of the invention are laid down in the dependent claims.

Preferably, the maximum length of the separation construction in the trough longitudinal direction is minimally three times as great as the above-mentioned maximum width of the drain trough.

Preferably, the waste water distributing construction, viewed in the built-in operating condition, comprises at least one overflow part for the waste water, which at least one overflow part in top plan view is of a shape elongated in the trough longitudinal direction for realizing the manner distributed in the trough longitudinal direction of waste water guidance to the separation construction.

In a preferred embodiment, the at least one overflow part, in the trough longitudinal direction, has deviations with respect to a straight overflow line for maintaining the manner distributed in the trough longitudinal direction of waste water guidance to the separation construction for compensating a waste water distributing construction possibly not placed level in the trough longitudinal direction. Without use of such deviations with respect to a straight overflow line, a waste water distributing construction not placed level would entail the risk that in case of particular volume streams of the waste water only a part of the overflow line would be overflowed by the waste water, so that in those cases only a part of the separation construction would be utilized for heat transfer.

In a further preferred embodiment, the heat exchanger furthermore comprises a stench resistant water seal construction which, viewed in the built-in operating condition and in the sense of the flow of the waste water, is situated upstream of the separation construction and wherein the elongated at least one overflow part is part of the stench resistant water seal construction in the sense that via the elongated at least one overflow part the waste water passes out of its water seal condition. This promotes the compactness of the heat exchanger, a special advantage being that this promotes, viewed in the built-in operating condition, the vertical dimension of the heat exchanger remaining limited.

Preferably, the maximum length of the elongated at least one overflow part in the trough longitudinal direction is minimally three times as great as the maximum width of the drain trough mentioned.

In the following, the invention is further elucidated with reference to the schematic figures in the appended drawing.
Fig. 1 shows in perspective and partly cut-away elevational view an example of an embodiment of a heat exchanger according to the invention.
Fig. 2 shows the example of Fig. 1 once again, however, in a partly disassembled condition.
Fig. 3 shows a vertical cross section of the heat exchanger of Fig. 1 in an operating condition built-in in a floor.
Fig. 4 shows a part of the heat exchanger of Fig. 1 in more detail.
Fig. 5 shows a cross section of the heat exchanger of Fig. 1, which cross section is taken along the horizontal plane designated with I in Fig. 3.
Fig. 6 shows a similar horizontal cross section to Fig. 5, however, the heat exchanger is provided with another embodiment of the heat exchanging separation construction.
Fig. 7 likewise shows a similar horizontal cross section to Fig. 5, however, the heat exchanger is provided with yet another embodiment of the heat exchanging separation construction.
Fig. 8 shows the heat exchanging separation construction of Fig. 7 in a side elevational view taken transversely to the trough longitudinal direction.
Fig. 9 shows another embodiment of a heat exchanger according to the invention in a cross section similar to that of Fig. 3.
Fig. 10 shows yet another embodiment of a heat exchanger according to the invention in a cross section similar to that of Fig. 3.
Fig. 11 shows yet another embodiment of a heat exchanger according to the invention in a cross section similar to that of Fig. 3.
Fig. 12 shows yet another embodiment of a heat exchanger according to the invention in a cross section similar to that of Fig. 3.
Fig. 13 shows yet another embodiment of a heat exchanger according to the invention in a cross section similar to that of Fig. 3.

It is noted that in the different drawing figures, parts and aspects that are similar for the different embodiments shown in some cases are designated with the same reference numerals.

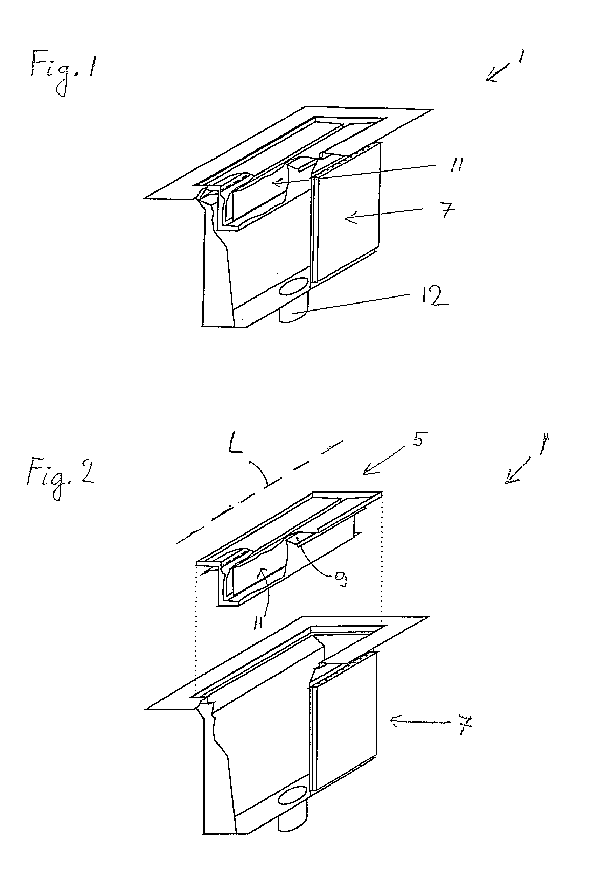

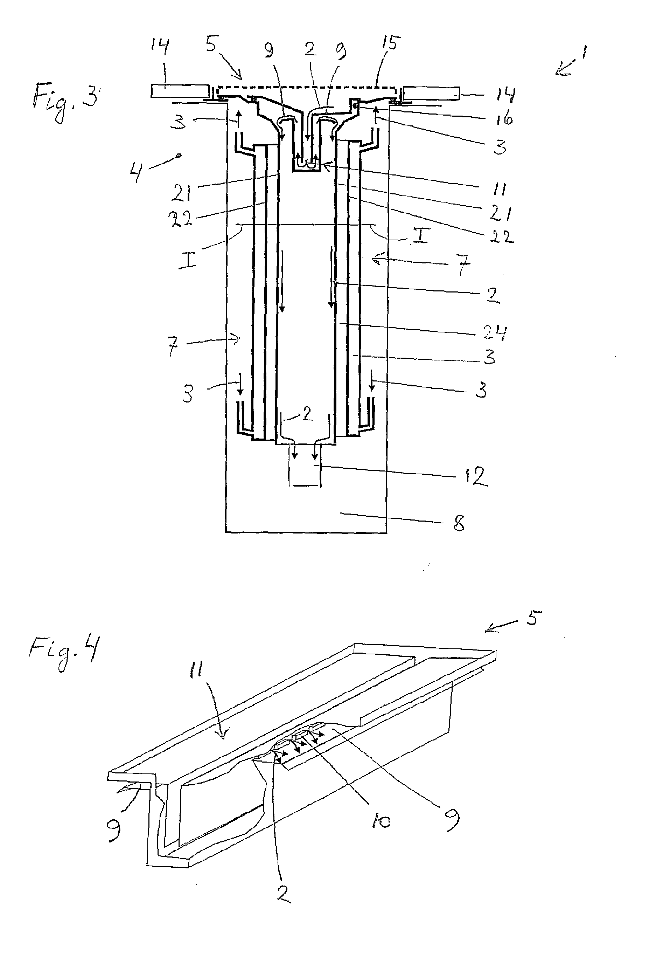

Presently referring first to the example of Figs. 1 through 5, there is shown a heat exchanger 1 for a shower arrangement. The heat exchanger 1 is designed for heat transfer from waste water 2, which is discharged from the shower arrangement, to tap water 3 which is supplied to the shower arrangement. The heat exchanger 1 is designed for building-in in a floor 4 of the shower arrangement. Fig. 3 shows a built-in operating condition. In the example shown, the floor 4 is provided with floor tiles 14.

Viewed in the built-in operating condition, the heat exchanger 1 comprises a drain trough 5 recessed in the floor, for collecting the waste water 2. The drain trough 5 has a substantially horizontally extending trough longitudinal direction L (see Fig. 2). Fig. 3 shows in broken lines a detachable cover element 15 of this drain trough 5. The cover element 15 is provided with a grid-like configuration of passages for the waste water 2.

Viewed in the built-in operating condition, the heat exchanger 1 furthermore comprises a heat exchanging separation construction 7 which keeps the waste water 2 and the tap water 3 separated from each other. Via this separation construction 7, the heat transfer mentioned takes place. The separation construction 7 is substantially located in a vertical projection space 8 of the drain trough 5, located under the drain trough 5. In the example shown, this downward projection space 8 is formed by a narrow boxlike recess 8 (see Fig. 3) in the floor 4. The tiled floor formed by the floor tiles 14 is interrupted at the floor recess 8. The separation construction 7 extends in the floor recess 8 substantially both in the trough longitudinal direction L and in vertical direction.

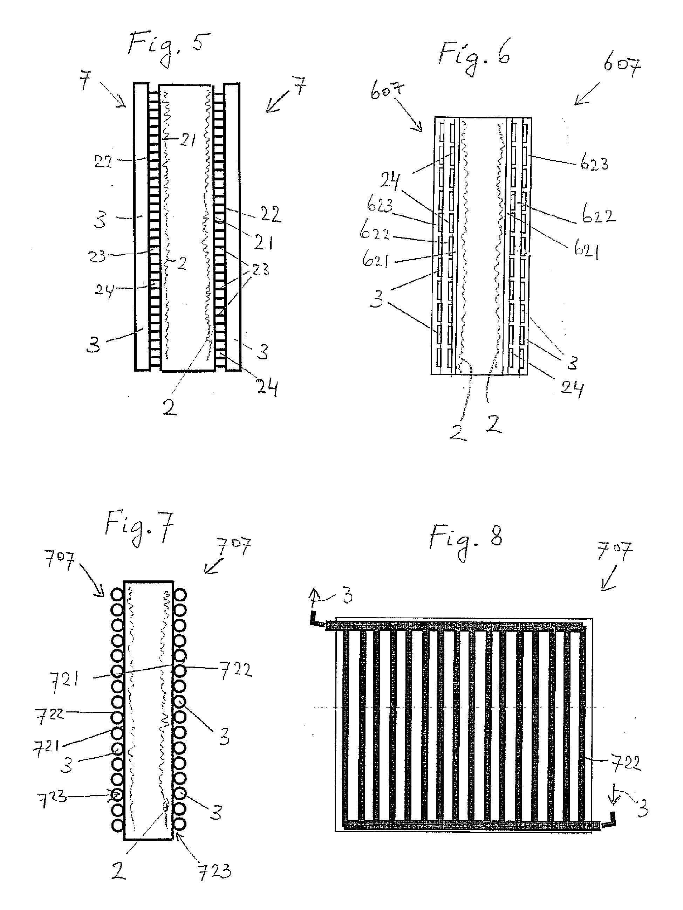

Figs. 3 through 5 show the heat exchanging separation construction in more detail. The separation construction shown is constructed from two substantially flat and mutually parallel placed such heat exchanging separation constructions 7. The separation constructions 7 each have a first wall 21 along which the still warm waste water 2 flows down. Fig. 3 shows that the tap water 3 to be heated is supplied to the constructions 7 at the lower sides thereof and is discharged from the constructions 7 at the upper sides thereof. The separation constructions 7 each have a second wall 22 along which the tap water 3 to be heated flows. This second wall 22 is connected with the first wall 21 via a number of fins 23 (see Fig. 5). The fins 23 may, for example, be soldered to the first wall 21 and to the second wall 22. Between the first wall 21 and the second wall 22 there are furthermore interspaces with air 24 in them. Heat from the waste water 2 is transferred to the tap water 3 via successively the first wall 21, the fins 23 and the second wall 22. The thus preheated tap water 3 may be conducted, for example, to a mixer tap of the shower arrangement and/or to a heating boiler for further heating of the preheated water. From the heating boiler, the further heated tap water may be conducted, for example, to the mixer tap.

The construction consisting of the first wall 21, the second wall 22 and the fins 23 (see Fig. 5) forms a so-called "double separation" between the waste water 2 and the tap water 3. Such a double separation reduces the risk that waste water and tap water can mix with each other in the event that one or more leakage passages were to form in the first wall 21 and in the second wall 22. The fins 23 have the function of creating the above-mentioned interspaces with air 24 between the first wall 21 and the second wall 22. The presence of these interspaces makes it possible that when a leakage passage has formed in the first wall 21 or in the second wall 22, a passage for leaking waste water or leaking tap water to the interspaces is created before waste water and tap water can mix with each other. Waste water or tap water flowing to the interspaces can then be timely detected in the sense that the interspaces function as (part of) a leak detection channel. Detection of leaking water can take place, for example, by visual perception, but also, for example, by means of one of the various known or otherwise realizable leak detectors or leak detection mechanisms that may be provided with various kinds of alerting means. Preferably, the thicknesses of the fins 23 are less than 2.0 millimeters. These thicknesses are found to be small enough to sufficiently prevent in practice the possible formation of a continuous leak passage that would extend via the interior of the fins 23 through both the first wall 21 and the second wall 22 without the leak passage formed first reaching an interspace with air 24. If the thicknesses of the fins 23 are between 1.0 and 2.0 millimeters, these thicknesses are found to be generally large enough to enable a good heat transfer via the fins 23.

Various other embodiments of the heat exchanging separation construction are possible. An example of such other embodiment is shown in Fig. 6 showing two substantially flat and mutually parallel placed such heat exchanging separation constructions 607. The separation construction 607 shown comprises three plates connected to each other, for example, plates soldered to each other. These plates may be, for example, of copper. The first plate 621 and the second plate 622 function respectively as the above-mentioned first wall 21 and second wall 22 of Fig. 5. It can be seen that the second plate 622 has a number of fins with which the second plate 622 is soldered to the first plate 621. Thus, between the first plate 621 and the second plate 622, again interspaces are formed for air 24. The third plate 623 has a number of fins with which the third plate 623 is soldered to the second plate 622. Between the second plate 622 and the third plate 623, channels are thus formed for tap water 3. The last-mentioned channels may form a channel system which can be connected to a supply and discharge for tap water to and from the separation construction. In this manner, also, a double separation with adequate leak detection possibility is obtained.

It is noted that the interspaces for air 24 and the channels for tap water 3 may naturally be formed in various other ways. For example, the second plate 622 may also be not provided with fins as mentioned, while instead the first plate 621 has such fins. Also, the second plate 622 may be provided with fins on its other side, while the third plate 623 then has no such fins. But it is also possible that two mutually facing sides of two interconnected plates are both provided with fins, the fins of one plate then joining the fins of the other plate. Various combinations of such variants mentioned are naturally possible as well.

Another example of a such other embodiment is shown in Figs. 7 and 8 showing two substantially flat and mutually parallel placed such heat exchanging separation constructions 707. The separation construction 707 shown comprises a first plate 721 which functions as the above-mentioned first wall 21 of Fig. 5, as well as a pipe system whose pipe walls 722 each function as the above-mentioned second wall 22 of Fig. 5. Through the pipe system flows the tap water 3. The pipe walls 722 may be connected with the first plate 721 by means of soldered longitudinal fins. The positions of such longitudinal fins are designated in Fig. 7 with reference numerals 723. Also in this manner, a double separation with adequate leak detection possibility is obtained.

Reference is now made to the example of Figs. 1 through 5 again.

The heat exchanger 1 shown comprises a stench resistant water seal construction 11 which, viewed in the built-in operating condition and in the sense of the flow of the waste water 2, is situated upstream of the separation construction 7. In Fig. 3, a sealing element of the water seal construction 11 is shown with reference numeral 16. Furthermore, the heat exchanger 1 at its underside has a discharge connection 12 for connection to the sewer system.

Viewed in the built-in operating condition, the heat exchanger 1 comprises furthermore a waste water distributing construction which, viewed in the built-in operating condition and in the sense of the flow of the waste water 2, is situated upstream of the separation construction 7 and guides the waste water collected by the drain trough 5 in a manner distributed in the trough longitudinal direction L to the separation construction 7.

In the example shown, this is realized in that the waste water distributing construction, viewed in the built-in operating condition, comprises at least one overflow part 9 for the waste water 2, which at least one overflow part in top plan view is of a shape elongated in the trough longitudinal direction L. More particularly, in the example shown, this is realized in that the elongated at least one overflow part 9 is part of the stench resistant water seal construction 11 in the sense that via the elongated at least one overflow part 9 the waste water 2 passes out of its water seal condition.

Fig. 4 shows that the at least one overflow part 9 in the trough longitudinal direction L has deviations 10 with respect to a straight overflow line for maintaining the above-mentioned manner distributed in the trough longitudinal direction of waste water guidance to the separation construction 7 for compensating a waste water distributing construction possibly not placed level in the trough longitudinal direction L. In the example shown, these deviations are formed by a number of local elevations 10 having therebetween through-flow areas for waste water 2. These through-flow areas may optionally be bounded at their upper sides in that the elevations 10 are connected with each other there. In the latter case, the through-flow areas can hence be through-flow openings in an upstanding rib.

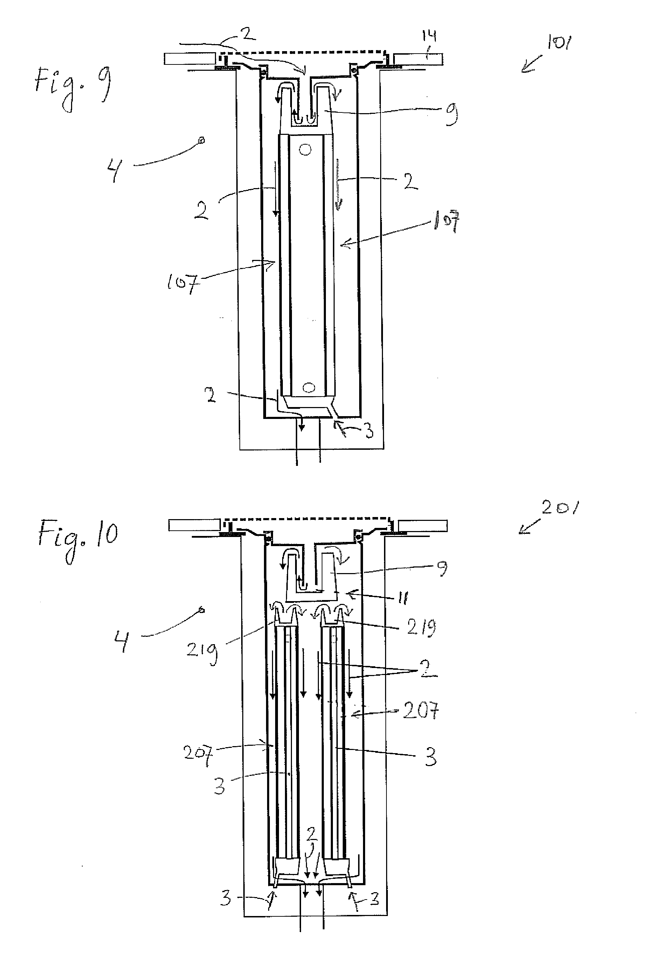

Reference is now made to the heat exchanger 101 shown in Fig. 9. The heat exchanger 101 has a separation construction which is constructed from two substantially flat and mutually parallel placed heat exchanging separation constructions 107. A difference between the heat exchanger 1 and the heat exchanger 101 is that in the heat exchanger 1 the waste water 2 is guided along two mutually facing-away surfaces of the two separation constructions 7, whereas in the heat exchanger 101 the waste water 2 is guided along two mutually facing surfaces of the two separation constructions 107.

Reference is now made to the heat exchanger 201 shown in Fig. 10. The heat exchanger 201 has a separation construction that is constructed from two substantially flat and mutually parallel placed heat exchanging separation constructions 207. A difference between the heat exchanger 1 and the heat exchanger 201 is that in the heat exchanger 1 the waste water 2 is guided along two mutually facing-way surfaces of the two separation constructions 7, whereas in the heat exchanger 201 the waste water 2, supplemental thereto, is also guided along two mutually facing surfaces of the two separation constructions 207. As a result, the total heat transfer surface is enlarged. In the example shown, this is realized in that the overflow part 9 guides the waste water to two similar such overflow parts 219. The overflow parts 219 may again be optionally provided, in the trough longitudinal direction, with the earlier-mentioned deviations with respect to a straight overflow line for maintaining the above-mentioned manner distributed in the trough longitudinal direction of waste water guidance to the separation construction for compensating a waste water distributing construction possibly not placed level in the trough longitudinal direction.

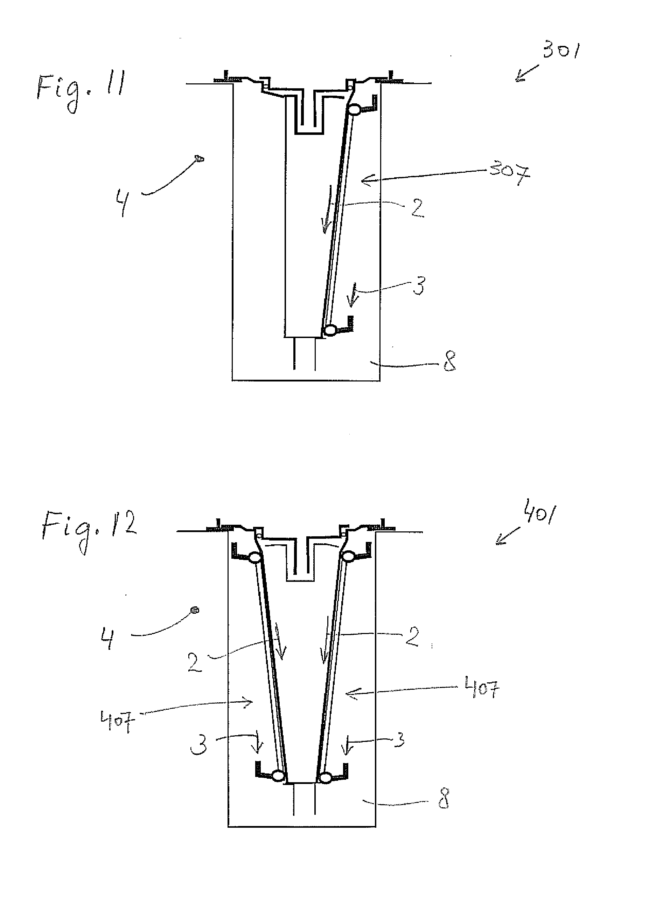

Reference is now made to the heat exchanger 301 shown in Fig. 11. The heat exchanger 301 has a separation construction comprising a substantially flat heat exchanging separation construction 307 placed at a slight angle to the vertical. This promotes a good contact between the separation construction and the waste water 2 flowing over it.

Reference is now made to the heat exchanger 401 shown in Fig. 12. The heat exchanger 401 has a separation construction that is constructed from two substantially flat heat exchanging separation constructions 407 that are each placed at a slight angle to the vertical.

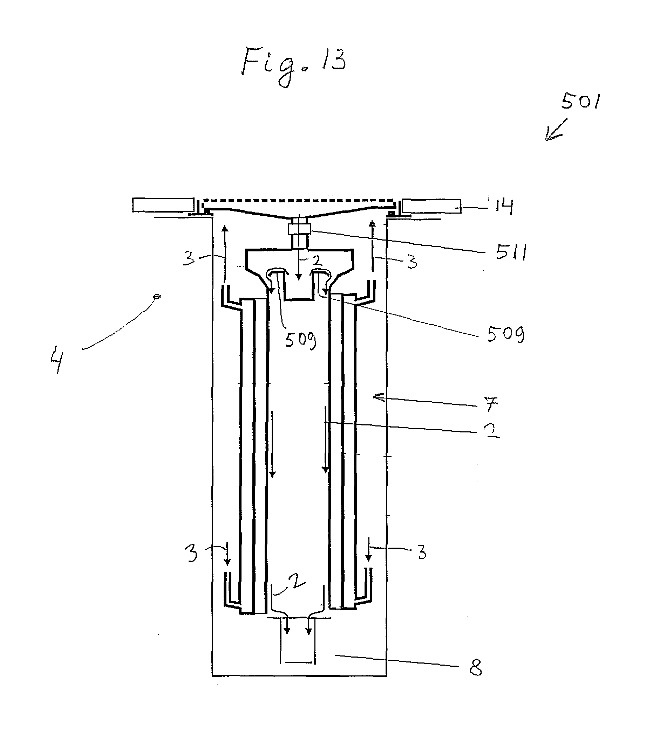

Reference is now made to the heat exchanger 501 shown in Fig. 13. A difference between the heat exchanger 1 and the heat exchanger 501 is that in the heat exchanger 501 the elongated at least one overflow part 509 is not part of the stench resistant water seal construction of the heat exchanger 501. The heat exchanger 501 shown has a separate stench resistant water seal construction 511 which can take the form of various commercially available water seal constructions, such as, for example, the conventional siphon comprising concentrically interlocking water seal walls.

It is noted that the above-mentioned examples of embodiments of the invention do not limit the invention and that within the scope of the appended claims various alternatives are possible.

Thus, the trough longitudinal direction, instead of being straight, may also be non-straight. For example, the trough longitudinal direction may, locally or throughout the length of the drain trough, be curved to a greater or lesser extent, or be bent at one or more points.

Other variants or modifications, however, are also possible. These and similar alternatives are understood to fall within the framework of the invention as defined in the appended claims.

## Claims

1. A heat exchanger for a shower arrangement, designed for heat transfer from waste water (2) which is discharged from the shower arrangement to tap water (3) which is supplied to the shower arrangement, and designed for building-in in a floor (4) of the shower arrangement, which heat exchanger (1; 101; 201; 301; 401; 501), viewed in built-in operating condition, comprises:
- a drain trough (5) lying recessed in the floor for collecting the waste water, which drain trough has a substantially horizontally extending trough longitudinal direction (L);
- a heat exchanging separation construction (7) which keeps the waste water and the tap water separated from each other, via which separation construction said heat transfer takes place, and which separation construction is substantially located in a vertical projection space (8) of the drain trough, located under the drain trough, and extends in said projection space substantially both in the trough longitudinal direction and in vertical direction; and
- a waste water distributing construction (9; 219; 509) which, viewed in the built-in operating condition and in the sense of the flow of the waste water, is situated upstream of the separation construction and guides the waste water collected by the drain trough in a manner distributed in the trough longitudinal direction to the separation construction.

2. A heat exchanger according to claim 1, wherein, viewed in the built-in operating condition, the maximum length of the drain trough (5) in the trough longitudinal direction (L) is minimally four times as great as the maximum horizontally measured width of the drain trough transverse to the trough longitudinal direction, and the maximum length of the separation construction (7) in the trough longitudinal direction is minimally three times as great as said maximum width of the drain trough.

3. A heat exchanger according to claim 1 or 2, wherein the waste water distributing construction, viewed in the built-in operating condition, comprises at least one overflow part (9; 219; 509) for the waste water (2), which at least one overflow part in top plan view is of a shape elongated in the trough longitudinal direction (L) for realizing said manner distributed in the trough longitudinal direction of waste water guidance to the separation construction (7).

4. A heat exchanger according to claim 3, wherein the at least one overflow part (9; 219; 509) in the trough longitudinal direction (L) has deviations (10) with respect to a straight overflow line for maintaining said manner distributed in the trough longitudinal direction of waste water guidance to the separation construction (7) for compensating a waste water distributing construction possibly not placed level in the trough longitudinal direction.

5. A heat exchanger according to claim 3 or 4, further comprising a stench resistant water seal construction (11) which, viewed in the built-in operating condition and in the sense of the flow of the waste water (2), is situated upstream of the separation construction and wherein the elongated at least one overflow part (9) is part of the stench resistant water seal construction in the sense that via the elongated at least one overflow part the waste water passes out of its water seal condition.

6. A heat exchanger according to any one of claims 3 through 5, wherein, viewed in the built-in operating condition, the maximum length of the drain trough (5) in the trough longitudinal direction (L) is minimally four times as great as the maximum horizontally measured width of the drain trough transverse to the trough longitudinal direction, and the maximum length of the elongated at least one overflow part (9; 219; 509) in the trough longitudinal direction is minimally three times as great as said maximum width of the drain trough.
